# EUROPÄISCHE PATENTSCHRIFT

(11) **EP 1 182 123 B1**
(45) Veröffentlichungstag und Bekanntmachung des Hinweises auf die Patenterteilung: **21.05.2008**
(21) Anmeldenummer: 01120039.1
(22) Anmeldetag: 20.08.2001
(51) Int. Cl.: B62J 11/00, F16B 2/08

(54) **Halterung**
Support
Support

(30) Priorität: 21.08.2000 DE 10040806
(43) Veröffentlichungstag der Anmeldung: 27.02.2002
(60) Teilanmeldung: 08006493.4
(73) Patentinhaber: ABUS August Bremicker Söhne KG, 58300 Wetter (DE)
(72) Erfinder:
(74) Vertreter: Manitz, Finsterwald & Partner GbR

(56) Entgegenhaltungen:
- WO-A2-99/22963
- GB-A- 1 235 356
- US-A- 2 604 098
- US-A- 3 533 588

## Beschreibung

Die Erfindung betrifft eine Halterung für die Befestigung von Funktionselementen an stangenförmigen Elementen gemäß dem Oberbegriff des Anspruchs 1. Eine derartige Halterung ist beispielsweise aus der GB-A-1 235 356 bekannt. Die WO 99/22963 A2 offenbart eine Halterung zur Befestigung von Zubehörteilen an einem Rahmen, bei der ein flexibles Band mittels eines verrastbaren Rotationselements gespannt werden kann.

Derartige Halterungen werden beispielsweise im Zweiradbereich dafür eingesetzt, Schloßhalterungen, Beleuchtungsmittel, Trinkflaschen und dergleichen an einem stangenförmigen Rahmenelement eines Zweirads anzubringen.

Der Erfindung liegt die Aufgabe zugrunde, eine Halterung der eingangs genannten Art bereitzustellen, die für stangenförmige Elemente mit unterschiedlichen Querschnittsformen und Querschnittsgrößen verwendbar ist, wobei insbesondere eine einfache, stabile und dauerhafte Befestigung der Halterung am stangenförmigen Element bei gleichzeitiger kostengünstiger Herstellungsmöglichkeit der Halterung gewährleistet werden kann.

Erfindungsgemäß wird die Aufgabe durch die Merkmale des Anspruchs 1 gelöst.

Erfindungsgemäß wird also das freie bzw. andere Ende des Bandelementes um das stangenförmige Element gelegt und anschließend in den Durchgangsschlitz des Rotationselements gesteckt. Dabei wird das Bandelement so weit durch den Durchgangsschlitz bewegt, bis es sich möglichst gut an das stangenförmige Element angelegt hat, woraufhin das Rotationselement beispielsweise mittels eines geeigneten Werkzeugs derart gedreht wird, daß das Bandelement auf dem Rotationselement aufgewickelt wird. Während dieses Aufwickelvorgangs greifen die Hervorhebungen und Vertiefungen des Rotationselements in die entsprechenden Hervorherbungen und Vertiefungen der Aufnahme ein und verhindern auf diese Weise, daß sich das Rotationselement zurückdreht.

Das Rotationselement wird nun so weit gedreht, bis das Bandelement straff um das stangenförmige Element gespannt und die Halterung somit stabil am stangenförmigen Element befestigt ist. Dabei wird durch die Reibung zwischen Bandelement und Rotationselement bzw. durch Selbsthemmung des Bandelementes sichergestellt, daß sich dieses relativ zum Rotationselement nicht bewegt. Schließlich kann der ungenutzte Bereich des Bandelementes, welcher aus der Halterung hervorsteht, abgeschnitten werden.

Durch die erfindungsgemäße Verwendung des Bandelementes wird erreicht, daß die Halterung an stangenförmigen Elementen mit beliebigem Querschnitt und beliebiger Größe befestigt werden kann, da sich das flexible und somit frei formbare Bandelement durch die aufgebrachte Zugspannung an beliebige Querschnitte anpaßt und durch eine ausreichende Länge des Bandelementes beliebige Querschnittsgrößen von stangenförmigen Elementen zum Einsatz können.

Bevorzugt ist es, wenn das Gehäuse eine Bandelementeintrittsöffnung aufweist, die sich ausgehend von dem mittels des Bandelements zu umspannenden stangenförmigen Element in Richtung des Rotationselements erstreckt. Durch diese Bandelementeintrittsöffnung wird das Bandelement bei der Montage der Halterung in den Durchgangsschlitz des Rotationselements eingeführt.

Die Hervorhebungen und Vertiefungen der Aufnahme für das Rotationselement können in dem der Bandelementeintrittsöffnung zugewandten Bereich der für das Rotationselement vorgesehenen Aufnahme angeordnet werden. Dabei genügt es, wenn diese Hervorhebungen und Vertiefungen ausschließlich in diesem Bereich der Aufnahme vorgesehen werden, da die am Rotationselement angreifende Zugspannung des Bandelementes bewirkt, daß das Rotationselement in den Bereich dieser Hervorhebungen und Vertiefungen gezogen wird, so daß ein unbeabsichtigtes Zurückdrehen des Rotationselements während oder nach der Montage ausgeschlossen werden kann.

Erfindungsgemäß sind die Hervorhebungen des Rotationselements hinterschneidungsfrei ausgebildet. Auf diese Weise wird ermöglicht, daß das Rotationselement durch Aufbringen einer entsprechenden Drehkraft, beispielsweise mittels eines Werkzeugs, auch wieder gezielt zurückgedreht werden kann, um die Halterung so vom stangenförmigen Element zu demontieren. Bevorzugt können die Hervorhebungen an ihren radial außenliegenden Enden abgerundet sein.

Das Gehäuse weist bevorzugt zumindest eine sich ausgehend von der Befestigungsstelle in Richtung des mittels des Bandelements zu umspannenden stangenförmigen Elements erstreckende Bandelementaustrittsöffnung. Durch diese Bandelementaustrittsöffnung tritt das an der Befestigungsstelle befestigte Bandelement aus dem Gehäuse aus und legt sich an das stangenförmige Element an, woraufhin es durch die bereits erwähnte Bandelementeintrittsöffnung in Richtung des Durchgangsschlitzes des Rotationselements bewegt werden kann.

Bevorzugt ist es, wenn zwei oder mehrere Bandelementaustrittsöffnungen vorgesehen werden, die jeweils an unterschiedliche Querschnittsgrößen der stangenförmigen Elemente angepaßt sind. Dies wird nachfolgend noch anhand der Figuren erläutert.

Das Rotationselement ist bevorzugt axial in die im Gehäuse ausgebildete Aufnahme einschiebbar und dort vorzugsweise axial fixierbar. Dies ermöglicht ein einfaches werksseitiges Zusammenbauen der erfindungsgemäßen Halterung.

Von Vorteil ist es, wenn das Rotationselement als Zahnhantel ausgebildet wird, welche einen Bereich kleineren Durchmessers besitzt, der zwischen zwei Bereichen größeren Durchmessers angeordnet ist, wobei die beiden Bereiche größeren Durchmessers auf ihrer Mantelfläche jeweils Hervorhebungen und Vertiefungen aufweisen und der Bereich kleineren Durchmessers mit dem Durchgangsschlitz versehen ist. In diesem Fall kann das Bandelement auf dem Bereich kleineren Durchmessers aufgewickelt werden, während die Bereiche größeren Durchmessers durch die Hervorhebungen und Vertiefungen verhindern, daß sich die Zahnhantel ungewollt zurückdreht.

Um ein Aufwickeln des Bandelementes auf dem Bereich kleineren Durchmessers zu ermöglichen, ist die Breite des Bereichs kleineren Durchmessers bevorzugt geringfügig größer bemessen als die Breite des Bandelements.

Bevorzugt ist in das Gehäuse eine Axialfixierung einsetzbar, welche in den zwischen den beiden Bereichen größeren Durchmessers der Zahnhantel ausgebildeten, dem Bereich kleineren Durchmessers benachbarten Zwischenraum eingreift. Da dieses Eingreifen also in demjenigen Bereich erfolgt, in dem das Bandelement aufgewickelt wird, muß sichergestellt werden, daß die Axialfixierung ein Aufwickeln des Bandelementes nicht behindert. Dies wird entweder dadurch erreicht, daß die Axialfixierung nur in einen solchen Bereich eingreift, in dem das Bandelement keinen Platz benötigt oder indem die Axialfixierung zurückfedernd ausgebildet ist, so daß sie durch das aufgewickelte Bandelement bezogen auf das Rotationselement radial nach außen gedrückt wird.

Bevorzugt ist die Axialfixierung bezogen auf das Rotationselement bzw. die Zahnhantel von der der Bandelementeintrittsöffnung abgewandten Seite in das Gehäuse einsetzbar. Zu diesem Zweck muß im Gehäuse eine entsprechende Öffnung ausgebildet sein, welche der Bandelementeintrittsöffnung gegenüberliegt.

Besonders vorteilhaft ist es, wenn die Axialfixierung zumindest ein federndes Element umfaßt, welches die Zahnhantel in Richtung der Bandelementeintrittsöffnung unter Vorspannung setzt. Auf diese Weise kommen die Hervorhebungen und Vertiefungen der Zahnhantel in Eingriff mit den Hervorhebungen und Vertiefungen der Aufnahme, so daß eine unbeabsichtigte Rotation der Zahnhantel verhindert wird.

Die Axialfixierung weist bevorzugt einen Durchgangsbereich für das Bandelement auf. Durch diesen Durchgangsbereich kann der bei montierter Halterung benötigte Abschnitt des Bandelementes aus dem Gehäuse hervorstehen und ggf. abgeschnitten werden.

Die Axialfixierung ist vorteilhafterweise im Gehäuse verrastbar, was das werksseitige Zusammenbauen der Halterung wiederum vereinfacht.

Von Vorteil ist es, wenn das Rotationselement stirnseitig, bevorzugt an beiden Stirnseiten, ein Werkzeugangriffselement, insbesondere eine Sechskantvertiefung für einen Inbusschlüssel, aufweist. In diesem Fall kann die erfindungsgemäße Halterung von einem Benutzer mit einem normalen, handelsüblichen Werkzeug am stangenförmigen Element fixiert werden, was insbesondere bei der Verwendung der erfindungsgemäßen Halterung im Zweiradbereich von Vorteil ist.

In das Werkzeugeingriffselement und/oder in den Zwischenraum zwischen dem Rotationselement und der als Langloch ausgebildeten Aufnahme kann ein Abschlußelement eingesetzt werden, welches bei montierter Halterung die Stirnseite des Rotationselements und die Aufnahme in optisch ansprechender Weise verdeckt. Wenn das Abschlußelement in den Zwischenraum zwischen dem Rotationselement und der als Langloch ausgebildeten Aufnahme eingesetzt wird, kann das Abschlußelement das Rotationselement zusätzlich in Richtung der Hervorhebungen und Vertiefungen der Aufnahme drücken, so daß ein verbesserter Eingriff zwischen Rotationselement und Aufnahme erzielt wird.

Der Durchgangsschlitz des Rotationselements kann sich mit zunehmender Tiefe ausgehend von einem größeren Querschnitt zu einem kleineren Querschnitt verjüngen. Diese trichterförmige Ausbildung des Durchgangsschlitzes erleichtert zum einen ein Einführen des Bandelementes und zum anderen erhöht sie die Reibung zwischen Bandelement und Rotationselement im Bereich des kleineren Querschnitts, so daß Relativbewegungen zwischen Bandelement und Rotationselement in noch höherem Maße verhindert werden.

Das Rotationselement kann stirnseitig, bevorzugt an beiden Stirnseiten, mit einer Markierung versehen sein, welche auf den Umfang des Rotationselements bezogen auf derjenigen Seite angeordnet ist, auf der sich der Durchgangsschlitz mit größerem Querschnitt öffnet. Diese Markierung kann dann vom Benutzer der erfindungsgemäßen Halterung durch Rotation des Rotationselements so ausgerichtet werden, daß sie in eine bestimmte Richtung, insbesondere auf eine am Gehäuse vorgesehene Markierung weist, wobei in dieser Position des Rotationselements sichergestellt ist, daß die Bandelementeintrittsöffnung mit dem Durchgangsschlitz des Rotationselements ausgerichtet ist, so daß ein problemloses Einführen des Bandelementes möglich wird.

Der freie Querschnitt der für das Rotationselement vorgesehenen Aufnahme ist bevorzugt etwas größer als der Außenumfang der Bereiche größeren Durchmessers der Zahnhantel, so daß ein problemloses Einführen der Zahnhantel in die Aufnahme ermöglicht wird.

Die im Gehäuse vorgesehene Aufnahme für das Rotationselement ist vorteilhafterweise als Langloch ausgebildet. Auf diese Weise wird erreicht, daß das Rotationselement senkrecht zu seiner Drehachse in der Aufnahme verschoben werden kann, so daß es möglich wird, die Hervorhebungen und Vertiefungen des Rotationselements je nach Bedarf bei Montage oder Demontage der erfindungsgemäßen Halterung in oder außer Eingriff mit den Hervorhebungen und Vertiefungen der Aufnahme zu bringen. Bei der Montage der erfindungsgemäßen Halterung wird das Rotationselement im Langloch zwangsläufig durch das Aufwickeln des Bandelementes in Richtung der Bandelementeintrittsöffnung gezogen, so daß die Hervorhebungen und Vertiefungen des Rotationselements in Eingriff mit den Hervorhebungen und Vertiefungen der Aufnahme gelangen.

Alternativ ist es jedoch auch möglich, die im Gehäuse vorgesehene Aufnahme als Durchbrechung mit kreisrundem Querschnitt auszubilden. In diesem Fall können dann beispielsweise ein, bevorzugt zwei, schwenkbar gelagerte, unter Vorspannung stehende Zahnschuhe in die Durchbrechung hineinragen, wobei die Zähne der Zahnschuhe komplementär zu den Hervorhebungen und Vertiefungen des Rotationselements ausgebildet sind. Die Relativbewegung zwischen den Hervorhebungen und Vertiefungen des Rotationselements und den Zähnen der einen Bestandteil der Aufnahme bildenden Zahnschuhe wird in diesem Fall also nicht durch das Langloch, sondern durch die Schwenkbarkeit der Zahnschuhe erreicht.

Bei der Ausbildung des Rotationselements als Zahnhantel ist es bevorzugt, wenn die beiden Zahnschuhe in den beiden Bereichen größeren Durchmessers der Zahnhantel vorgesehen sind, da in diesen beiden Bereichen - wie bereits erwähnt - auch die Hervorhebungen und Vertiefungen, die mit den Zahnschuhen in Eingriff gelangen sollen, vorhanden sind. In den genannten Bereichen können ferner je eine umlaufende Hervorhebung bzw. Vertiefung in der Zahnhantel und komplementär ausgebildete Bereiche in der Aufnahme vorgesehen werden, so daß durch einen wechselweisen Eingriff dieser Bereiche eine axiale Fixierung der Zahnhantel in der Aufnahme erreicht wird.

Um eine gezielte Demontage der erfindungsgemäßen Halterung zu ermöglichen, können die Zahnschuhe über die Aufbringung einer Kraft auf eine Angriffsfläche vom Rotationselement weg bewegbar ausgebildet werden. Durch eine solche Bewegung werden die Zähne außer Eingriff mit den Hervorhebungen und Vertiefungen der Zahnhantel gebracht, so daß die Zahnhantel in einer Richtung zurückgedreht werden kann, in der das Bandelement von der Zahnhantel abgewickelt und die Halterung somit von dem stangenförmigen Element gelöst wird.

An der erfindungsgemäßen Halterung ist bevorzugt eine Anschlußfläche für ein Funktionselement, insbesondere eine Schloßhalterung, einen Beleuchtungskörper oder eine Trinkflasche vorgesehen. Alternativ ist es jedoch auch möglich, ein solches Funktionselement einstückig mit der erfindungsgemäßen Halterung auszubilden.

Das Gehäuse der erfindungsgemäßen Halterung weist bevorzugt eine Vertiefung zur Aufnahme eines Bereichs des stangenförmigen Elements auf, wobei diese Vertiefung vorteilhafterweise so ausgebildet ist, daß das stangenförmige Element vollflächig oder zumindest an zwei Linienbereichen an der Vertiefung anliegt, um so eine möglichst große Kraftübertragungsfläche zwischen stangenförmigem Element und Halterung zu schaffen.

Das Bandelement wird bevorzugt aus einem weitgehend ermüdungsfreien, nur geringfügig dehnbaren Material gefertigt; insbesondere bietet sich hier die Verwendung von Polypropylen oder Polyester an.

Das Rotationselement kann beispielsweise aus Zink-Druckguß gefertigt werden.

Als Gehäusematerial bietet sich die Verwendung von glasfaserverstärktem, bruchfestem Kunststoff an.

Das Bandelement kann z.B. als Gewebe- oder Textilband oder als Metallband ausgeführt werden. Alternativ ist es auch möglich, das Bandelement als gummiertes Band oder als Gummiband auszuführen.

Weitere bevorzugte Ausführungsformen der Erfindung sind in den Unteransprüchen beschrieben.

Die Erfindung wird nachfolgend anhand von Beispielen unter Bezugnahme auf die Zeichnungen erläutert; in diesen zeigen:
- Figur 1: eine Seitenansicht einer an einem stangenförmigen Element befestigten erfindungsgemäßen Halterung gemäß einer ersten Ausführungsvariante einschließlich Bandelement,
- Figur 2: eine perspektivische Ansicht einer Halterung gemäß Figur 1 ohne Bandelement,
- Figur 3: eine perspektivische Ansicht einer Halterung gemäß Figur 1 mit Bandelement,
- Figur 4: eine weitere perspektivische Ansicht einer erfindungsgemäßen Halterung gemäß Figur 3,
- Figur 5: eine perspektivische Ansicht einer erfindungsgemäßen Halterung gemäß den Figuren 1 bis 4, welche an einem stangenförmigen Element vergrößerten Durchmessers befestigt ist,
- Figur 6: eine perspektivische Ansicht einer erfindungsgemäßen Zahnhantel mit zwei Zahnschuhen, und
- Figur 7: eine Seitenansicht eines Teilbereichs einer erfindungsgemäßen Halterung gemäß einer zweiten Ausführungsvariante mit Zahnhantel und Zahnschuhen gemäß Figur 6.

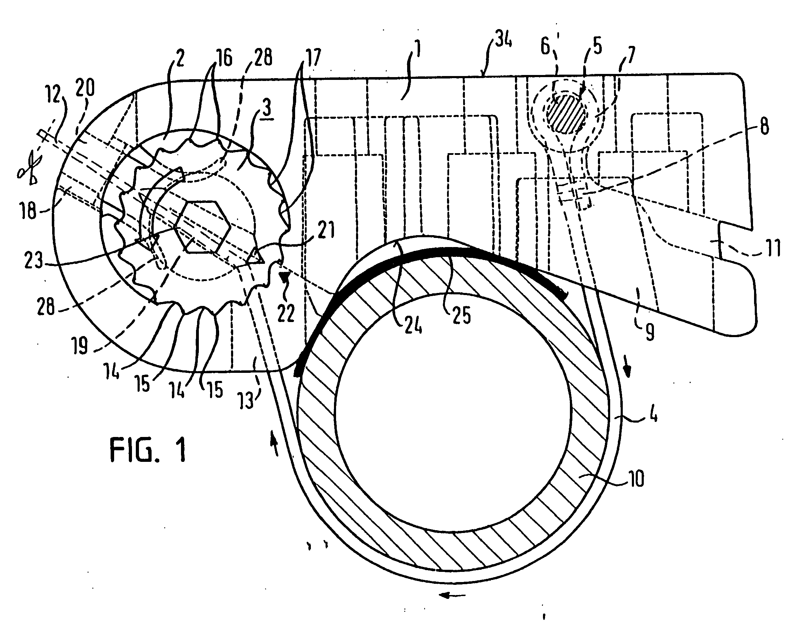

Die erfindungsgemäße Halterung gemäß Figur 1 besteht im wesentlichen aus einem Gehäuse 1, in welchem in einer dafür vorgesehenen Aufnahme 2 ein als Zahnhantel ausgebildetes Rotationselement 3 angeordnet ist und einem Bandelement 4, welches an einer Befestigungsstelle 5 fest mit dem Gehäuse 1 verbunden ist.

Die Befestigungsstelle 5 ist im wesentlichen durch einen gehärteten oder ungehärteten Stahlstift 6 gebildet, welcher fest mit dem Gehäuse 1 verbunden oder in das Gehäuse eingelegt ist und um den ein Ende des Bandelementes 4 in der Weise geschlungen ist, daß das Bandelement 4 im Bereich des Stahlstiftes 6 eine Schlaufe 7 bildet, wobei zu diesem Zweck das freie Ende 8 des Bandelements 4 mit einem von diesem freien Ende 8 beabstandeten Bereich des Bandelementes 4 vernäht ist.

Das auf die genannte Weise am Stahlstift 6 im Bereich der Befestigungsstelle 5 im Gehäuse 1 festgelegte Bandelement 4 tritt aus einer ersten Bandelementaustrittsöffnung 9 aus dem Gehäuse 1 aus. Die Bandelementaustrittsöffnung 9 ist dabei so bemessen, daß das Bandelement unter verschiedenen Winkeln aus dem Gehäuse 1 austreten kann, um so unterschiedlichen Querschnittsgrößen von stangenförmigen Elementen 10 Rechnung tragen zu können, an denen die erfindungsgemäße Halterung befestigt werden soll.

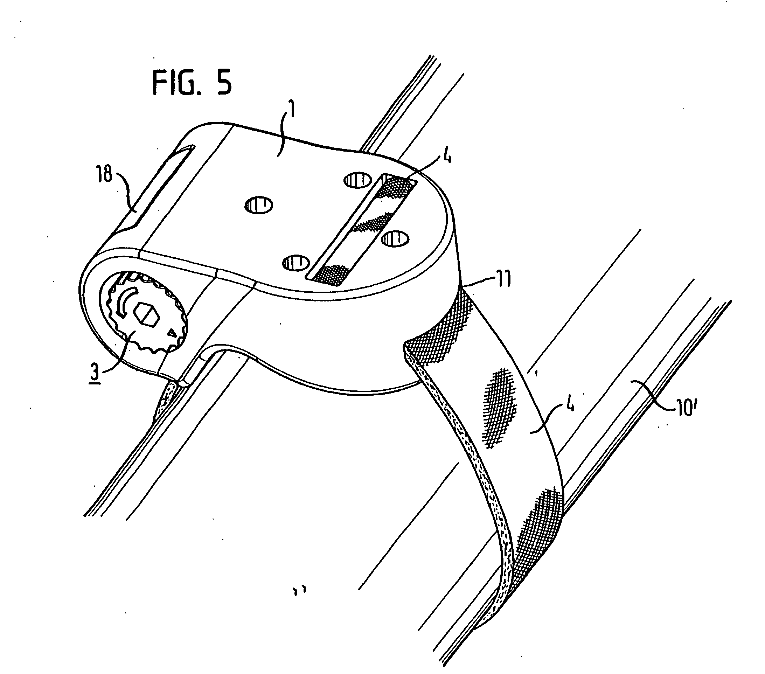

Im Gehäuse 1 ist noch eine weitere Bandelementaustrittsöffnung 11 vorgesehen, die sich unter einem anderen Winkelbereich von der Befestigungsstelle 5 weg erstreckt als die Bandelementaustrittsöffnung 9. Diese weitere Bandelementaustrittsöffnung 11 wird dann anstelle der Bandelementaustrittsöffnung 9 zum Austritt des Bandelementes 4 genutzt, wenn die erfindungsgemäße Halterung gemäß Figur 1 an einem stangenförmigen Element mit deutlich größerem Durchmesser festgelegt werden soll (siehe Figur 5).

Ausgehend von der Bandelementaustrittsöffnung 9 wird das Bandelement 4 um das im dargestellten Beispiel hohlzylindrische stangenförmige Element 10 gelegt und anschließend mit seinem der Befestigungsstelle 5 abgewandten freien Ende 12 in eine im Gehäuse 1 ausgebildete Bandelementeintrittsöffnung 13 eingeführt. Ebenso wie die Bandelementaustrittsöffnungen 9, 11 ist die Bandelementeintrittsöffnung 13 so ausgebildet, daß das Bandelement 4 unter verschiedenen Winkeln in das Gehäuse 1 eintreten kann, um so wiederum verschiedenen Querschnittsgrößen von stangenförmigen Elementen 10 Rechnung tragen zu können.

Die Bandelementeintrittsöffnung 13 erstreckt sich von der Außenseite des Gehäuses 1 in Richtung der Zahnhantel 3 bis in die Aufnahme 2 hinein, so daß das Bandelement 4 durch die Bandelementeintrittsöffnung 13 in den Bereich der Aufnahme 2 geschoben werden kann.

Die Aufnahme 2 ist im dargestellten Ausführungsbeispiel als Langloch ausgeführt, welches in demjenigen Bereich mit Hervorhebungen 14 und Vertiefungen 15 versehen ist, der der Bandelementeintrittsöffnung 13 zugewandt ist.

Die Zahnhantel 3 besitzt entlang ihres äußeren Umfangs Hervorhebungen 16 und Vertiefungen 17, welche komplementär zu den Hervorhebungen 14 und Vertiefungen 15 des Langlochs 2 ausgebildet sind, so daß die Zahnhantel 3 durch die ineinander eingreifenden Hervorhebungen 14, 16 und Vertiefungen 15, 17 rotatorisch im Langloch 2 fixiert werden kann. Wenn allerdings die Zahnhantel 3 im Langloch 2 von der Bandelementeintrittsöffnung 13 weg bewegt wird, kommen die Hervorhebungen 14, 16 und Vertiefungen 15, 17 außer Eingriff, so daß eine Rotation der Zahnhantel 3 im Langloch 2 möglich wird.

Alle Hervorhebungen 14 und Vertiefungen 15 sind hinterschneidungsfrei und abgerundet ausgebildet, so daß - bei Aufbringung entsprechend großer Kräfte - grundsätzlich zur Demontage der Halterung eine Rotation der Zahnhantel 3 im Langloch 2 entgegen der eingezeichneten Pfeilrichtung auch dann beschädigungsfrei möglich ist, wenn die Hervorhebungen 14, 16 und Vertiefungen 15, 17 miteinander in Eingriff sind.

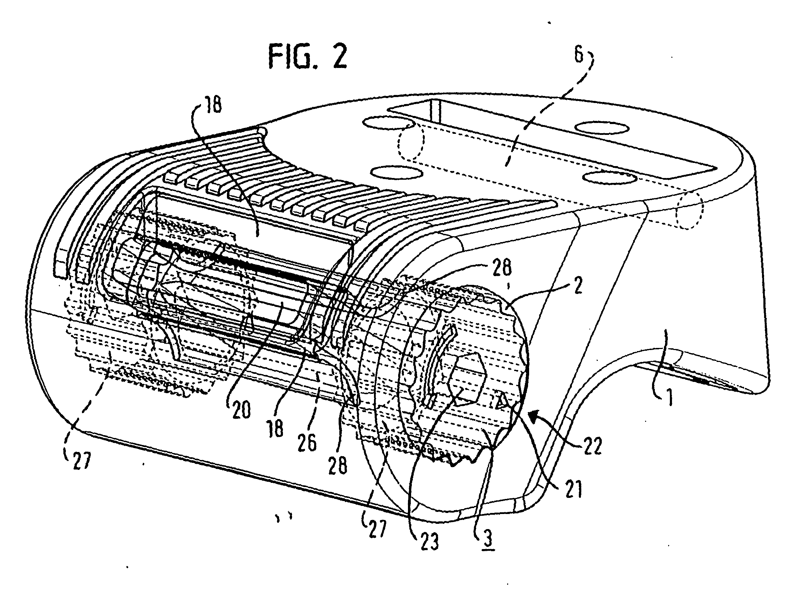

In das Gehäuse 1 ist bezogen auf die Zahnhantel 3 auf der von der Bandelementeintriffsöffnung 13 abgewandten Seite eine Axialfixierung 18 einschiebbar. Diese Axialfixierung wird nachstehend unter Bezugnahme auf Figur 2 näher erläutert.

Die Zahnhantel 3 besitzt einen Durchgangsschlitz 19 (Fig. 1), durch den das freie Ende 12 des Bandelements 4 gefädelt werden kann, nachdem es die Bandelementeintriffsöffnung 13 passiert hat. Über einen in der Axialfixierung 18 vorgesehenen Durchgangsbereich 20 tritt das freie Ende 12 des Bandelements 4 aus dem Gehäuse 1 aus.

Der Durchgangsschlitz 19 der Zahnhantel 3 verjüngt sich mit zunehmender Tiefe ausgehend von einem größeren Querschnitt zu einem kleineren Querschnitt. Um ein Einfädeln des freien Endes 12 des Bandelements 4 in den Durchgangsschlitz 19 zu erleichtern, ist die Zahnhantel 3 stirnseitig mit einer Markierung 21 versehen, welche auf den Umfang der Zahnhantel 3 bezogen auf derjenigen Seite angeordnet ist, auf der sich der Durchgangsschlitz 19 mit größerem Querschnitt öffnet. Um die korrekte rotatorische Ausrichtung der Zahnhantel 3 zu vereinfachen, ist auf dem Gehäuse 1 eine weitere Markierung 22 vorgesehen, mit der die Markierung 21 der Zahnhantel 3 auszurichten ist.

Die Zahnhantel 3 ist stirnseitig mit einer Sechskantvertiefung 23 versehen, in die ein Inbusschlüssel eingeführt werden kann, um die Zahnhantel 3 gezielt in Rotation zu versetzen.

Das Gehäuse 1 weist zwischen der Befestigungsstelle 5 und dem Langloch 2 eine Vertiefung 24 auf, welche zur Aufnahme eines Bereichs des stangenförmigen Elements 10 vorgesehen ist. Zwischen stangenförmigem Element 10 und Vertiefung 24 ist eine optionale flexible, insbesondere aus Gummi bestehende Einlage 25 angeordnet, welche die Reibung zwischen stangenförmigem Element 10 und Gehäuse 1 erhöht und zudem eine Kraft erzeugt, die ein unbeabsichtigtes Lösen der erfindungsgemäßen Halterung vom stangenförmigen Element 10 verhindert. Wenn das Bandelement 4 als gummiertes Band oder als Gummiband ausgeführt wird, kann die flexible Einlage 25 entfallen.

An dem der Vertiefung 24 abgewandten Ende des Gehäuses 1 ist eine Anschlußfläche 34 für beliebige Funktionselemente, insbesondere für Schloßhalterungen, Beleuchtungsmittel oder Trinkflaschen vorgesehen.

Aus der perspektivischen Darstellung gemäß Figur 2 ist ersichtlich, daß die Zahnhantel 3 einen Bereich kleineren Durchmessers 26 besitzt, der zwischen zwei Bereichen größeren Durchmessers 27 angeordnet ist. Die beiden Bereiche größeren Durchmessers 27 sind auf ihrer Mantelfläche jeweils mit den Hervorhebungen 16 und Vertiefungen 17 versehen, während in dem Bereich kleineren Durchmessers 26 keine derartigen Hervorhebungen und Vertiefungen vorhanden sind. Im Bereich kleineren Durchmessers 26 ist jedoch der Durchgangsschlitz 19 für das Bandelement 4 vorhanden. Da die Breite des Bereichs kleineren Durchmessers 26 etwas größer bemessen ist als die Breite des Bandelements 4, ist es möglich, das Bandelement 4 auf den Bereich kleineren Durchmessers 26 aufzuwickeln, so daß sich das aufgewickelte Bandelement 4 letztlich zwischen den beiden Bereichen größeren Durchmessers 27 befindet.

Das Langloch 2 ist so bemessen, daß sein Querschnitt größer ist als der Querschnitt der Bereiche größeren Durchmessers 27 der Zahnhantel 3, so daß die Zahnhantel 3 axial von außen in das Langloch 2 eingesetzt werden kann. Um die Position der Zahnhantel 3 im Langloch 2 axial zu fixieren, ist die in Verbindung mit Figur 1 bereits erwähnte Axialfixierung 18 vorgesehen, welche von außen in das Gehäuse 1 einschiebbar ist. Diese Axialfixierung 18 greift in den zwischen den beiden Bereichen größeren Durchmessers 27 der Zahnhantel 3 ausgebildeten Bereich, der dem Bereich kleineren Durchmessers 26 der Zahnhantel 3 benachbart ist, ein. Dabei besitzt die Axialfixierung 18 zwei federnde Elemente 28, welche den genannten Eingriff bewerkstelligen und so angeordnet sind, daß keine Axialbewegung der Zahnhantel 3 im Langloch 2 möglich ist.

Dadurch, daß die Elemente 28 federnd ausgebildet sind, ist sichergestellt, daß sie dem aufzuwickelnden Bandelement 4 nicht im Wege stehen und das aufgewickelte Bandelement 4 die federnden Elemente 28 bezogen auf die Zahnhantel 3 radial nach außen drücken kann. Zudem drücken die federnden Elemente 28 die Zahnhantel 3 vor bzw. während der Montage der Halterung in Richtung der Hervorhebungen 14 und Vertiefungen 15 der Aufnahme 2, so daß keine unbeabsichtigte Rotation der Zahnhantel 3 erfolgt.

Bei der Montage einer erfindungsgemäßen Halterung gemäß den Figuren 1 und 2 wird das Bandelement auf die beschriebene Weise um das stangenförmige Element 10 gelegt und durch die Bandelementeintrittsöffnung 13, den Durchgangsschlitz 19 und den Durchgangsbereich 20 gefädelt, bis das Bandelement 4 sich möglichst gut an das stangenförmige Element 10 anlegt. Anschließend wird dann die Zahnhantel mittels eines in die Sechskantvertiefung 23 eingeführten Inbusschlüssels in Pfeilrichtung gedreht, wodurch eine Spannung des Bandelements 4 und eine Kompression der optionalen flexiblen Einlage 25 bewirkt wird. Dabei verhindert die Reibung zwischen dem Bandelement 4 und dem Durchgangsschlitz 19, insbesondere dem Bereich verringerten Querschnitts des Durchgangsschlitzes 19, daß sich das Bandelement 4 wieder aus dem Durchgangsschlitz 19 herausbewegt. Sollte diese Reibung hierfür nicht ausreichen, wird die Zahnhantel 3 so weit gedreht (zumindest 180°), bis im Bereich kleineren Durchmessers 26 der Zahnhantel 3 Bandelement 4 auf Bandelement 4 zu liegen kommt, so daß hier eine Selbsthemmung eintritt, die dann ein ungewolltes Austreten des Bandelementes 4 aus dem Durchgangschlitz 19 verhindert. So ist es möglich, mittels des Inbusschlüssels die erfindungsgemäße Halterung sehr fest und dauerhaft am stangenförmigen Element 10 zu fixieren.

Der nicht benötigte Bereich des Bandelements 4 kann nach erfolgter Befestigung im Bereich des in Figur 1 gezeigten Scherensymbols abgeschnitten werden.

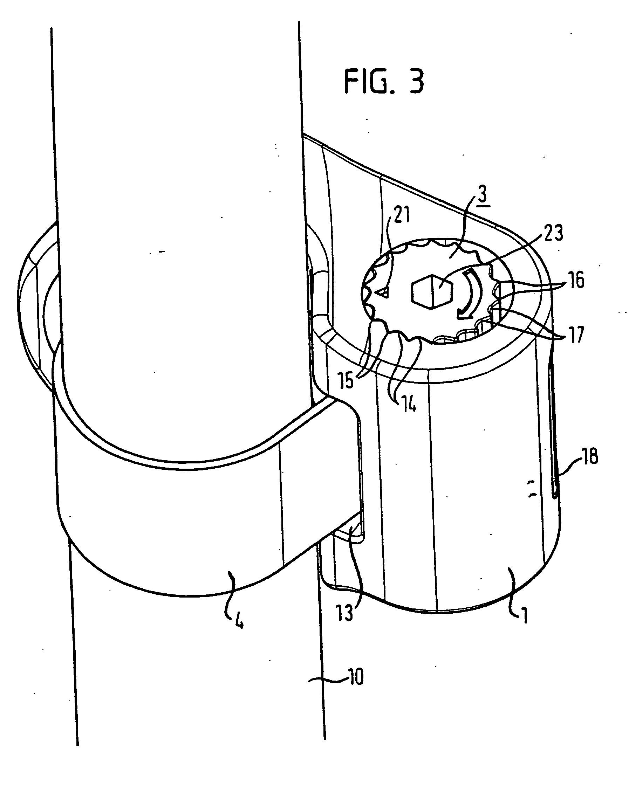

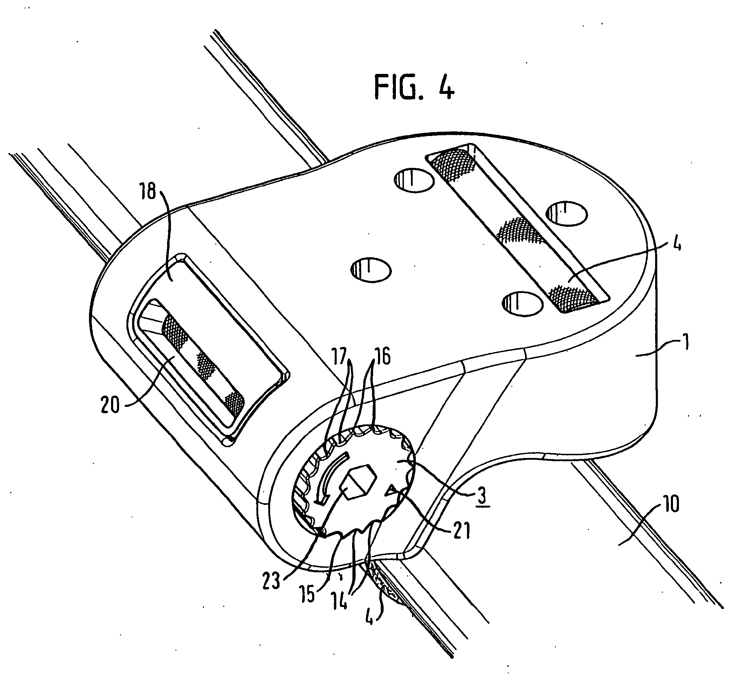

Die Figuren 3 und 4 zeigen jeweils eine perspektivische Ansicht aus verschiedenen Blickwinkeln, wobei hier jeweils die am stangenförmigen Element 10 festgelegte erfindungsgemäße Halterung gemäß den Figuren 1 und 2 dargestellt ist. Die in den Figuren 3 und 4 verwendeten Bezugszeichen entsprechen denjenigen der Figuren 1 und 2.

Figur 5 zeigt eine erfindungsgemäße Halterung gemäß den Figuren 1 bis 4, wobei diese Halterung gemäß Figur 5 nun an einem stangenförmigen Element 10' mit stark vergrößertem Durchmesser festgelegt ist. Um dies zu ermöglichen, tritt das Bandelement 4 gemäß Figur 5 nicht wie bei den Figuren 3 und 4 aus der Bandelementaustrittsöffnung 9, sondern aus der Bandelementaustrittsöffnung 11 aus dem Gehäuse 1 aus (siehe Figur 1).

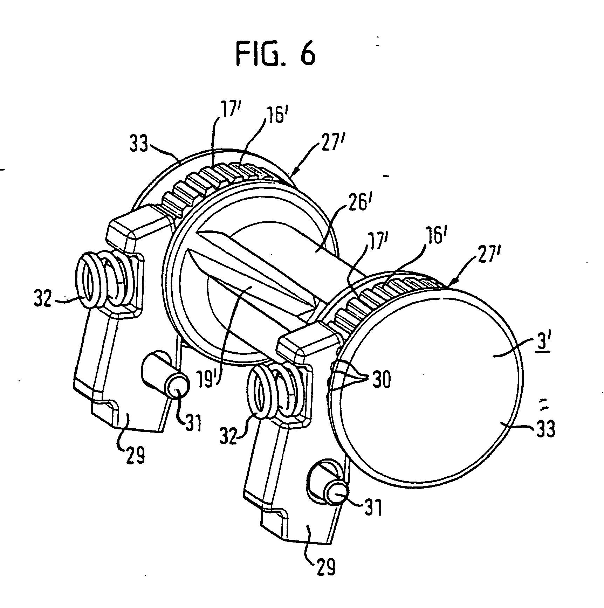

Figur 6 zeigt eine perspektivische Darstellung einer alternativ ausgebildeten Zahnhantel 3'. In Übereinstimmung mit der Zahnhantel 3 gemäß den Figuren 1 bis 5 weist auch die Zahnhantel 3' einen Bereich kleineren Durchmessers 26' auf, welcher zwischen zwei Bereichen größeren Durchmessers 27' angeordnet ist, wobei die beiden Bereiche größeren Durchmessers 27' auf ihrer Mantelfläche jeweils Hervorhebungen 16' und Vertiefungen 17' besitzen. Der Bereich kleineren Durchmessers 26' weist wiederum einen Durchgangsschlitz 19' auf, welcher sich mit zunehmender Tiefe ausgehend von einem größeren Querschnitt zu einem kleineren Querschnitt verjüngt.

Die beiden Bereiche größeren Durchmessers 27 mit ihren Hervorhebungen 16' und ihren Vertiefungen 17' stehen jeweils in Eingriff mit einem Zahnschuh 29, welcher jeweils Zähne 30 besitzt, die komplementär zu den Hervorhebungen 16' und Vertiefungen 17' der Bereiche größeren Durchmessers 27' der Zahnhantel 3' ausgebildet sind.

Beide Zahnschuhe 29 sind über jeweils einen Stift 31 schwenkbar gelagert und werden von jeweils einer Druckfeder 32 derart unter Vorspannung gesetzt, daß sie in Richtung der Zahnhantel 3' gedrückt werden, so daß die Zähne 30 der Zahnschuhe 29 in Eingriff mit den Hervorhebungen 16' und Vertiefungen 17' gelangen.

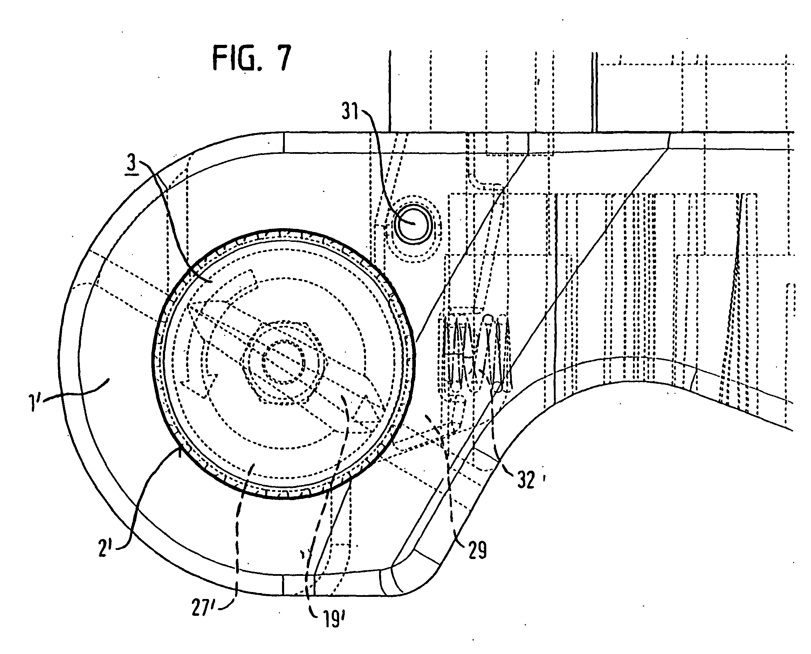

Figur 7 zeigt, in welcher Weise die Zahnschuhe 29 über die Stifte 31 im Gehäuse 1' der erfindungsgemäßen Halterung fixiert sind. Durch die schwenkbare Lagerung der Zahnschuhe 29 und die Beaufschlagung durch die Druckfedern 32 werden die Zahnschuhe 29 in den Bereich der Aufnahme 2' gedrückt, in der die Zahnhantel 3' aufgenommen ist. Um einen Eingriff der Zähne 30 der Zahnschuhe 29 in die Vertiefungen 17' der Zahnhantel 3' zu ermöglichen, ist die Aufnahme 2' in Richtung der Zahnschuhe 29 geöffnet, d.h., das Gehäuse 1 besitzt in dem entsprechenden Bereich eine Durchbrechung.

Im Unterschied zu der Ausführungsform gemäß den Figuren 1 bis 5 kann bei Vorsehung der Zahnschuhe 29 die Aufnahme 2' kreisrund ausgebildet werden.

Bevorzugt kann die Zahnhantel 3' auf ihren beiden Stirnseiten mit jeweils einer Abschlußkappe 33 versehen werden, von denen zumindest eine abnehmbar ist. Der Durchmesser der Abschlußkappen 33 ist dabei größer bemessen als der Durchmesser der Aufnahme 2'. Auf diese Weise können die Abschlußkappen 33 die Aufnahme 2' vollständig überdecken, was ein ansprechendes Erscheinungsbild der erfindungsgemäßen Halterung ergibt.

Im Sinne der Erfindung wird auch die Befestigung eines Schlauches an einem Rohr oder eines Rohrkörpers an einem anderen Rohrkörper als Befestigung eines Funktionselements (Schlauch, Rohrkörper) an einem stangenförmigen Element (Rohr, Rohrkörper) verstanden. Auch die Befestigung eines Funktionselements an einem stangenförmigen Element dadurch, daß das Funktionselement zwischen Bandelement und stangenförmigem Element eingeklemmt wird, fällt unter die Erfindung.

### Bezugszeichenliste

- 1, 1': Gehäuse
- 2, 2': Aufnahme / Langloch
- 3, 3': Rotationselement / Zahnhantel
- 4: Bandelement
- 5: Befestigungsstelle
- 6: Stahlstift
- 7: Schlaufe
- 8: freies Ende des Bandelementes
- 9: Bandelementaustrittsöffnung
- 10, 10': stangenförmiges Element
- 11: Bandelementaustrittsöffnung
- 12: freies Ende
- 13: Bandelementeintrittsöffnung
- 14: Hervorhebungen
- 15: Vertiefungen
- 16, 16': Hervorhebungen
- 17, 17': Vertiefungen
- 18: Axialfixierung
- 19, 19': Durchgangsschlitz
- 20: Durchgangsbereich
- 21: Markierung
- 22: Markierung
- 23: Sechskantvertiefung
- 24: Vertiefung
- 25: flexible Einlage
- 26, 26': Bereich kleineren Durchmessers
- 27, 27': Bereich größeren Durchmessers
- 28: federnde Elemente
- 29: Zahnschuhe
- 30: Zähne
- 31: Stift
- 32: Druckfeder
- 33: Abschlußkappen
- 34: Anschlußfläche

## Patentansprüche

1. Halterung für die Befestigung von Funktionselementen an stangenförmigen Elementen (10, 10'), mit einem Bandelement (4), welches mit einem Ende in einem Gehäuse (1, 1') an einer Befestigungsstelle (5) fixiert ist, und einem Rotationselement (3, 3'), welches in einer im Gehäuse (1) ausgebildeten Aufnahme (2, 2') drehbar gelagert ist und einen Durchgangsschlitz (19, 19') für das andere Ende des Bandelementes (4) aufweist, wobei das Rotationselement (3, 3') zumindest einen im wesentlichen zylindrischen Abschnitt (27, 27') aufweist, dessen mit Hervorhebungen (16, 16') und Vertiefungen (17, 17') versehene Mantelfläche sich parallel zur Drehachse des Rotationselements (3, 3') erstreckt und mit einem Abschnitt der Aufnahme (2, 2') in Eingriff bringbar ist, die komplementär ausgebildete Hervorhebungen (14) und Vertiefungen (15) aufweist, und wobei das Rotationselement (3, 3') senkrecht zu seiner Drehachse in der Aufnahme (2, 2') verschiebbar ist,
**dadurch gekennzeichnet,**
**daß** die Hervorhebungen (16, 16') des Rotationselements (3, 3') hinterschneidungsfrei ausgebildet sind.

2. Halterung nach Anspruch 1,
**dadurch gekennzeichnet,**
**daß** das Gehäuse (1, 1') eine Bandelementeintrittsöffnung (13) aufweist, die sich ausgehend von dem mittels des Bandelements (4) zu umspannenden stangenförmigen Element (10, 10') in Richtung des Rotationselements (2, 2') erstreckt.

3. Halterung nach einem der vorhergehenden Ansprüche,
**dadurch gekennzeichnet,**
**daß** die Hervorhebungen (14) und Vertiefungen (15) in dem der Bandelementeintrittsöffnung (13) zugewandten Bereich der für das Rotationselement (3, 3') vorgesehenen Aufnahme (2, 2') angeordnet sind.

4. Halterung nach einem der vorhergehenden Ansprüche,
**dadurch gekennzeichnet,**
**daß** die Hervorhebungen (16, 16') des Rotationselements (3, 3') an ihren radial außen liegenden Enden abgerundet ausgebildet sind.

5. Halterung nach einem der vorhergehenden Ansprüche,
**dadurch gekennzeichnet,**
**daß** das Gehäuse (1, 1') zumindest eine sich ausgehend von der Befestigungsstelle (5) in Richtung des mittels des Bandelements (4) zu umspannenden stangenförmigen Elements (10, 10') erstreckende Bandelementaustrittsöffnung (9, 11) aufweist.

6. Halterung nach einem der vorhergehenden Ansprüche,
**dadurch gekennzeichnet,**
**daß** das Rotationselement (3, 3') axial in die im Gehäuse (1, 1') ausgebildete Aufnahme (2, 2') einschiebbar und dort insbesondere axial fixierbar ist.

7. Halterung nach einem der vorhergehenden Ansprüche,
**dadurch gekennzeichnet,**
**daß** das Rotationselement als Zahnhantel (3, 3') ausgebildet ist, welche einen Bereich kleineren Durchmessers (26, 26') besitzt, der zwischen zwei Bereichen (27, 27') größeren Durchmessers angeordnet ist, wobei die beiden Bereiche (27, 27') größeren Durchmessers auf ihrer Mantelfläche jeweils Hervorhebungen (16 ,16') und Vertiefungen (17, 17') aufweisen und der Bereich kleineren Durchmessers (26, 26') mit dem Durchgangsschlitz (19, 19') versehen ist.

8. Halterung nach Anspruch 7,
**dadurch gekennzeichnet,**
**daß** die Breite des Bereichs kleineren Durchmessers (26, 26') geringfügig größer ist als die Breite des Bandelements (4).

9. Halterung nach einem der Ansprüche 7 oder 8,
**dadurch gekennzeichnet,**
**daß** in das Gehäuse (1, 1') eine Axialfixierung (18) einsetzbar ist, welche in den zwischen den beiden Bereichen größeren Durchmessers (27, 27') der Zahnhantel (3, 3') ausgebildeten, dem Bereich kleineren Durchmessers (26, 26') benachbarten Zwischenraum eingreift.

10. Halterung nach einem der Ansprüche 7 bis 9,
**dadurch gekennzeichnet,**
**daß** die Axialfixierung (18) bezogen auf die Zahnhantel (3, 3') von der der Bandelementeintrittsöffnung (13) abgewandten Seite in das Gehäuse (1, 1') einsetzbar ist.

11. Halterung nach einem der Ansprüche 7 bis 10,
**dadurch gekennzeichnet,**
**daß** die Axialfixierung (18) zumindest ein federndes Element (28) umfaßt, welches die Zahnhantel (3, 3') in Richtung der Bandelementeintrittsöffnung (13) unter Vorspannung setzt.

12. Halterung nach einem der Ansprüche 7 bis 11,
**dadurch gekennzeichnet,**
**daß** die Axialfixierung (18) einen Durchgangsbereich (20) für das Bandelement (4) aufweist.

13. Halterung nach einem der Ansprüche 7 bis 12,
**dadurch gekennzeichnet,**
**daß** die Axialfixierung (18) im Gehäuse (1, 1') verrastbar ist.

14. Halterung nach einem der vorhergehenden Ansprüche,
**dadurch gekennzeichnet,**
**daß** das Rotationselement (3, 3') stirnseitig ein Werkzeugangriffselement, insbesondere einen Sechskantvertiefung (23) für einen Inbusschlüssel, aufweist.

15. Halterung nach einem der vorhergehenden Ansprüche,
**dadurch gekennzeichnet,**
**daß** sich der Durchgangsschlitz (19, 19') mit zunehmender Tiefe ausgehend von einem größeren Querschnitt zu einem kleineren Querschnitt verjüngt.

16. Halterung nach Anspruch 15,
**dadurch gekennzeichnet,**
**daß** das Rotationselement (3, 3') stirnseitig mit einer Markierung (21) versehen ist, welche auf den Umfang des Rotationselements (3, 3') bezogen auf derjenigen Seite angeordnet ist, auf der sich der Durchgangsschlitz (19, 19') mit größerem Querschnitt öffnet.

17. Halterung nach einem der vorhergehenden Ansprüche, wenn abhängig von Anspruch 7,
**dadurch gekennzeichnet,**
**daß** der freie Querschnitt der für das Rotationselement (3, 3') vorgesehenen Aufnahme (2, 2') größer als der Außenumfang der Bereiche größeren Durchmessers (27, 27') der Zahnhantel (3, 3') ist.

18. Halterung nach einem der vorhergehenden Ansprüche,
**dadurch gekennzeichnet,**
**daß** die im Gehäuse (1) vorgesehene Aufnahme für das Rotationselement als Langloch (2) ausgebildet ist.

19. Halterung nach einem der Ansprüche 1 bis 17,
**dadurch gekennzeichnet,**
**daß** die im Gehäuse (1') vorgesehene Aufnahme für das Rotationselement (3') als Durchbrechung (2') mit kreisrundem Querschnitt ausgebildet ist.

20. Halterung nach Anspruch 19,
**dadurch gekennzeichnet,**
**daß** in die Durchbrechung (2') zumindest ein, bevorzugt zwei schwenkbar gelagerte, unter Vorspannung stehende Zahnschuhe (29) ragen, deren Zähne (30) komplementär zu den Hervorhebungen (16') und Vertiefungen (17') des Rotationselements (3') ausgebildet sind.

21. Halterung nach Anspruch 20, wenn abhängig von Anspruch 7,
**dadurch gekennzeichnet,**
**daß** die beiden Zahnschuhe (29) in den beiden Bereichen größeren Durchmessers (27') der Zahnhantel (3') vorgesehen sind.

22. Halterung nach einem der Ansprüche 20 oder 21,
**dadurch gekennzeichnet,**
**daß** die Zahnschuhe (29) über die Aufbringung einer Kraft auf eine Angriffsfläche vom Rotationselement (3') weg bewegbar sind.

23. Halterung nach einem der vorhergehenden Ansprüche,
**dadurch gekennzeichnet,**
**daß** eine Anschlußfläche (34) für ein Funktionselement vorgesehen ist.

24. Halterung nach einem der Ansprüche 1 bis 22,
**dadurch gekennzeichnet,**
**daß** sie einstückig mit einem Funktionselement ausgebildet ist.

25. Halterung nach einem der vorhergehenden Ansprüche,
**dadurch gekennzeichnet,**
**daß** das Gehäuse (1, 1') eine Vertiefung (24) zur Aufnahme eines Bereichs des stangenförmigen Elements (10, 10') aufweist.

26. Halterung nach einem der vorhergehenden Ansprüche,
**dadurch gekennzeichnet,**
**daß** das Bandelement (4) aus einem weitgehend ermüdungsfreien, nur geringfügig dehnbarem Material, insbesondere aus Polypropylen oder Polyester besteht.

27. Halterung nach einem der vorhergehenden Ansprüche,
**dadurch gekennzeichnet,**
**daß** das Rotationselement (3, 3') aus Zink-Druckguß besteht.

28. Halterung nach einem der vorhergehenden Ansprüche,
**dadurch gekennzeichnet,**
**daß** das Gehäuse (1, 1') aus glasfaserverstärktem, hochfestem Kunststoff besteht.

29. Halterung nach einem der vorhergehenden Ansprüche,
**dadurch gekennzeichnet,**
**daß** das Bandelement (4) als Gewebe-, Textil-, Gummi- oder als Metallband oder als gummiertes Band ausgeführt ist.

## Claims

1. A holder for the fastening of functional elements to bar-shaped elements (10, 10') having a band element (4) which is fixed at one end to a fastening point (5) in a housing (1, 1') and having a rotational element (3, 3') which is rotatably supported in a mount (2, 2') formed in the housing (1) and which has a throughgoing slot (19, 19') for the other end of the band element (4), with the rotational element (3, 3') having at least one substantially cylindrical section (27, 27') whose jacket surface provided with elevated portions (16, 16') and recesses (17, 17') extends parallel to the axis of rotation of the rotational element (3, 3') and can be brought into engagement with a section of the mount (2, 2') which has elevated portions (14) and recesses (15) formed in a complementary manner, and with the rotational element (3, 3') being displaceable perpendicular to its axis of rotation in the mount (2, 2'),
**characterised in that**
the elevated portions (16, 16') of the rotational element (3, 3') are made free of undercuts.

2. A holder in accordance with claim 1, **characterised in that** the housing (1, 1') has a band element inlet opening (13) which extends in the direction of the rotational element (2, 2'), starting from the bar-shaped element (10, 10') to be encompassed by means of the band element (4).

3. A holder in accordance with any one of the preceding claims, **characterised in that** the elevated portions (14) and the recesses (15) are arranged in the region facing the band element inlet opening (13) of the mount (2, 2') provided for the rotational element (3, 3').

4. A holder in accordance with any one of the preceding claims, **characterised in that** the elevated portions (16, 16') of the rotational element (3, 3') are made rounded at their radially outwardly disposed ends.

5. A holder in accordance with any one of the preceding claims, **characterised in that** the housing (1, 1') has at least one band element inlet opening (9, 11) which extends, starting from the fastening point (5), in the direction of the bar-shaped element (10, 10') to be encompassed by means of the band element 4).

6. A holder in accordance with any one of the preceding claims, **characterised in that** the rotational element (3, 3') can be pushed axially into the mount (2, 2') formed in the housing (1, 1') and can in particular be axially fixed there.

7. A holder in accordance with any one of the preceding claims, **characterised in that** the rotational element is made as a toothed barbell (3, 3') which has a region of smaller diameter (26, 26') which is arranged between two regions (27, 27') of larger diameter, with the two regions (27, 27') of larger diameter having respective elevated portions (16, 16') and recesses (17, 17') on their jacket surface and the region of smaller diameter (26, 26') being provided with the throughgoing slot (19, 19').

8. A holder in accordance with claim 7, **characterised in that** the width of the region of smaller diameter (26, 26') is slightly larger than the width of the band element (4).

9. A holder in accordance with any one of the claims 7 or 8, **characterised in that** an axial fixing (18) can be used in the housing (1, 1') which engages into the intermediate space formed between the two regions of larger diameter (27, 27') of the toothed bellbar (3, 3') and adjacent to the region of smaller diameter (26, 26').

10. A holder in accordance with any one of the claims 7 to 9, **characterised in that** the axial fixing (18) can be inserted into the housing (1, 1') from the side remote from the band element inlet opening (13) with respect to the toothed bellbar (3, 3').

11. A holder in accordance with any one of the claims 7 to 10, **characterised in that** the axial fixing (18) includes at least one resilient element (28) which biases the toothed bellbar (3, 3') in the direction of the band element inlet opening (13).

12. A holder in accordance with any one of the claims 7 to 11, **characterised in that** the axial fixing (18) has a passage region (20) for the band element (4).

13. A holder in accordance with any one of the claims 7 to 12, **characterised in that** the axial fixing (18) can be latched in the housing (1, 1').

14. A holder in accordance with any one of the preceding claims, **characterised in that** the rotational element (3, 3') has a tool engagement element, in particular a hexagonal recess (23) for an Allen key, at the end face.

15. A holder in accordance with any one of the preceding claims, **characterised in that** the passage slot (19, 19') tapers to a smaller cross-section with increasing depth starting from a larger cross-section.

16. A holder in accordance with claim 15, **characterised in that** the rotational element (3, 3') is provided at the end face with a marking (21) which is arranged on the periphery of the rotational element (3, 3') with respect to that side on which the passage slot (19, 19') with larger cross-section opens.

17. A holder in accordance with any one of the preceding claims, when dependent on claim 7, **characterised in that** the free cross-section of the mount (2, 2') provided for the rotational element (3, 3') is larger than the outer periphery of the regions of larger diameter (27, 27") of the toothed bellbar (3, 3').

18. A holder in accordance with any one of the preceding claims, **characterised in that** the mount for the rotational element provided in the housing (1) is made as an elongate hole (2).

19. A holder in accordance with any one of the claims 1 to 17, **characterised in that** the mount for the rotational element provided in the housing (1') is made as an orifice (2') with a circular cross-section.

20. A holder in accordance with claim 19, **characterised in that** at least one toothed shoe (29), preferably two pivotably supported, biased toothed shoes, project into the orifice (2'), with the teeth (30) of said toothed shoe(s) being made complementary to the elevated portions (16') and recesses (17') of the rotational element (3').

21. A holder in accordance with claim 20, when dependent on claim 7, **characterised in that** the two toothed shoes (29) are provided in the two regions of larger diameter (27') of the toothed barbell (3').

22. A holder in accordance with any one of the claims 20 or 21, **characterised in that** the toothed shoes (29) are movable away from the rotational element (3') via the application of a force onto an engagement surface.

23. A holder in accordance with any one of the preceding claims, **characterised in that** a connection surface (34) for a functional element is provided.

24. A holder in accordance with any one of the claims 1 to 22, **characterised in that** it is made in one piece with a functional element.

25. A holder in accordance with any one of the preceding claims, **characterised in that** the housing (1, 1') has a recess (24) for the mounting of a region of the bar-shaped element (10, 10').

26. A holder in accordance with any one of the preceding claims, **characterised in that** the band element (4) consists of a largely fatigue free, only slightly stretchable material, in particular of polypropylene or polyester.

27. A holder in accordance with any one of the preceding claims, **characterised in that** the rotational element (3, 3') is made of a zinc die casting.

28. A holder in accordance with any one of the preceding claims, **characterised in that** the housing (1, 1') consists of a glass fibre reinforced, high-strength plastic.

29. A holder in accordance with any one of the preceding claims, **characterised in that** the band element (4) is designed as a fabric band, a textile band, a rubber band or as a metal band or as a rubberised band.

## Revendications

1. Monture pour la fixation d'éléments fonctionnels sur des éléments en forme de tige (10, 10'), comprenant un élément en bande (4), lequel est fixé par une extrémité à un emplacement de fixation (5) dans un boîtier (1, 1'), et un élément rotatif (3, 3'), lequel est monté avec possibilité de rotation dans un logement (2, 2') réalisé dans le boîtier (1) et présente une fente traversante (19, 19') pour l'autre extrémité de l'élément en bande (4), ledit élément rotatif (3, 3') comprenant au moins un tronçon (27, 27') essentiellement cylindrique, dont la surface enveloppe pourvue de saillies (16, 16') et de renfoncements (17, 17') s'étend parallèlement à l'axe de rotation de l'élément rotatif (3, 3') et peut être amenée en engagement avec une portion du logement (2, 2') qui présente des saillies (14) et des renfoncements (15) réalisé(e)s de façon complémentaire, et dans laquelle l'élément rotatif (3, 3') est déplaçable perpendiculairement à son axe de rotation dans le logement (2, 2'),
**caractérisée en ce que**
les saillies (16, 16') de l'élément rotatif (3, 3') sont réalisées sans contre-dépouille.

2. Monture selon la revendication 1,
**caractérisée en ce que** le boîtier (1, 1') comprend une ouverture d'entrée (13) pour élément en bande, qui s'étend, en partant de l'élément en forme de tige (10, 10') qui doit être entouré au moyen de l'élément en bande (4), en direction de l'élément rotatif (2, 2').

3. Monture selon l'une des revendications précédentes,
**caractérisée en ce que** les saillies (14) et les renfoncements (15) sont agencés dans la région, tournée vers l'ouverture d'entrée (13) pour élément en bande, du logement (2, 2') prévu pour l'élément rotatif (3, 3').

4. Monture selon l'une des revendications précédentes,
**caractérisée en ce que** les saillies (16, 16') de l'élément rotatif (3, 3') sont réalisées de façon arrondie à leurs extrémités situées radialement à l'extérieur.

5. Monture selon l'une des revendications précédentes,
**caractérisée en ce que** le boîtier (1, 1') présente au moins une ouverture de sortie (9, 11) pour élément en bande, qui s'étend, en partant de l'emplacement de fixation (5), en direction de l'élément en forme de tige (10, 10') qui doit être entouré au moyen de l'élément en bande (4).

6. Monture selon l'une des revendications précédentes,
**caractérisée en ce que** l'élément rotatif (3, 3') peut être enfilé axialement dans le logement (2, 2') réalisé dans le boîtier (1, 1') et peut être fixé dans celui-ci, en particulier axialement.

7. Monture selon l'une des revendications précédentes,
**caractérisée en ce que** l'élément rotatif est réalisé sous forme de haltère dentée (3, 3'), laquelle possède une zone de petit diamètre (26, 26'), disposé entre deux zones (27, 27') de grand diamètre, lesdites deux zones (27, 27') de grand diamètre présentant sur leur surface enveloppe respectivement des saillies (16, 16') et des renfoncements (17, 17'), et la zone de petit diamètre (26, 26') étant pourvue de la fente traversante (19, 19').

8. Monture selon la revendication 7,
**caractérisée en ce que** la largeur de la zone de petit diamètre (26, 26') est légèrement plus grande que la largeur de l'élément en bande (4).

9. Monture selon l'une des revendications 7 ou 8,
**caractérisée en ce que** qu'une fixation axiale (18) peut être mise en place dans le boîtier (1, 1'), laquelle s'engage dans l'espace intermédiaire, réalisé entre les deux zones de grand diamètre (27, 27') de l'haltère dentée (3, 3'), voisin de la zone de petit diamètre (26, 26').

10. Monture selon l'une des revendications 7 à 9,
**caractérisée en ce que**, par référence à l'haltère dentée (3, 3'), la fixation axiale (18) peut être mise en place dans le boîtier (1, 1') depuis le côté détourné de l'ouverture d'entrée (13) pour élément en bande.

11. Monture selon l'une des revendications 7 à 10,
**caractérisée en ce que** la fixation axiale (18) comprend au moins un élément (28) à effet ressort, qui met l'haltère dentée (3, 3') sous précontrainte en direction de l'ouverture d'entrée (13) pour élément en bande.

12. Monture selon l'une des revendications 7 à 11,
**caractérisée en ce que** la fixation axiale (18) présente une zone traversante (20) pour l'élément en bande (4).

13. Monture selon l'une des revendications 7 à 12,
**caractérisée en ce que** la fixation axiale (18) est susceptible d'être enclenchée dans le boîtier (1, 1').

14. Monture selon l'une des revendications précédentes,
**caractérisée en ce que** l'élément rotatif (3, 3') présente du côté frontal un élément d'engagement d'outil, en particulier un creux hexagonal (23) pour une clé Allen.

15. Monture selon l'une des revendications précédentes,
**caractérisée en ce que** la fente traversante (19, 19') va en se rétrécissant, partant d'une section plus forte vers une section plus faible, en fonction de la profondeur.

16. Monture selon la revendication 15,
**caractérisée en ce que** l'élément rotatif (3, 3') est pourvu du côté frontal d'un marquage qui, par référence à la périphérie de l'élément rotatif (3, 3'), est agencé sur le côté vers lequel la fente traversante (19, 19') présente la section plus forte.

17. Monture selon l'une des revendications précédentes, prise en dépendance de la revendication 7,
**caractérisée en ce que** la section libre du logement (2, 2') prévu pour l'élément rotatif (3, 3') est plus grande que la périphérie extérieure des zones de grand diamètre (27, 27') de l'haltère dentée (3, 3').

18. Monture selon l'une des revendications précédentes,
**caractérisée en ce que** le logement prévu dans le boîtier (1) pour l'élément rotatif est réalisé sous forme de trou oblong (2).

19. Monture selon l'une des revendications 1 à 17,
**caractérisée en ce que** le logement prévu dans le boîtier (1') pour l'élément rotatif (3') est réalisé sous forme de traversée (2') avec section circulaire.

20. Monture selon la revendication 19,
**caractérisée en ce qu'**au moins un sabot denté (29) et de préférence deux sabots dentés montés pivotants et placés sous précontrainte font saillie dans la traversée (2'), dont les dents sont réalisées de façon complémentaire aux saillies (16') et aux renfoncements (17') de l'élément rotatif (3').

21. Monture selon la revendication 20, prise en dépendance de la revendication 7,
**caractérisée en ce que** les deux sabots dentés (29) sont prévus dans les deux zones de grand diamètre (27') de l'haltère dentée (3').

22. Monture selon l'une des revendications 20 ou 21,
**caractérisée en ce que** les sabots dentés (29) sont déplaçables en éloignement par application d'une force sur une surface d'attaque de l'élément rotatif (3').

23. Monture selon l'une des revendications précédentes,
**caractérisée en ce qu'**il est prévu une surface de raccordement (34) pour un élément fonctionnel.

24. Monture selon l'une des revendications 1 à 22,
**caractérisée en ce qu'**elle est réalisée d'une seule pièce avec un élément fonctionnel.

25. Monture selon l'une des revendications précédentes,
**caractérisée en ce que** le boîtier (1, 1') comporte un renfoncement (24) pour recevoir une zone de l'élément en forme de tige (10, 10').

26. Monture selon l'une des revendications précédentes,
**caractérisée en ce que** l'élément en bande (4) est constitué en un matériau largement dépourvu de fatigue et seulement faiblement extensible, en particulier en polypropylène ou en polyester.

27. Monture selon l'une des revendications précédentes,
**caractérisée en ce que** l'élément rotatif (3, 3') est une pièce en zinc moulée sous pression.

28. Monture selon l'une des revendications précédentes,
**caractérisée en ce que** le boîtier (1, 1') est réalisé en matière plastique renforcée par des fibres de verre, à haute résistance.

29. Monture selon l'une des revendications précédentes,
**caractérisée en ce que** l'élément en bande (4) est réalisé sous forme de bande en tissu, en textile, en caoutchouc ou en métal, ou sous forme de bande revêtue de caoutchouc.
